(19) Europäisches Patentamt

**European Patent Office**

**Office européen des brevets**

(11) Veröffentlichungsnummer: **0 288 429 B1**

(12) **EUROPÄISCHE PATENTSCHRIFT**

(45) Veröffentlichungstag der Patentschrift: **30.12.92**

(51) Int. Cl.⁵: **H02K 5/18**

(21) Anmeldenummer: **88810196.1**

(22) Anmeldetag: **24.03.88**

(54) **Rohrförmiges Gehäuse für einen Elektromotor.**

(30) Priorität: **31.03.87 DE 3710048**

(43) Veröffentlichungstag der Anmeldung:
**26.10.88 Patentblatt 88/43**

(45) Bekanntmachung des Hinweises auf die
Patenterteilung:
**30.12.92 Patentblatt 92/53**

(84) Benannte Vertragsstaaten:
**AT CH DE FR GB IT LI SE**

(73) Patentinhaber: **ALUSUISSE-LONZA SERVICES AG**
**Feldeggstrasse 4**
**CH-8034 Zürich(CH)**

(72) Erfinder: **Der Erfinder hat auf seine Nennung verzichtet**

EP 0 288 429 B1

## Beschreibung

Die Erfindung betrifft ein rohrförmiges Gehäuse für einen Elektromotor mit dar Gehäuse umgebender sowie daran festliegender Mantelschale nach dem Oberbegriff von Anspruch 1.

Es sind Elektromotoren mit einem Doppelmantel bekannt, dessen beide in Abstand zueinander koaxialen Mäntel durch Stege verbunden sind, die eine entsprechende Anzahl von Kühlkanälen begrenzen. Auch sind aus Blech geformte Außenmäntel für die Gehäuse von Elektromotoren auf dem Markt, die mit dem Motorengehäuse durch Schrauben verbunden werden. Diese Schraubbefestigung ist ebenso nachteilig wie der übliche Werkstoff Stahlblech des Außenmantels, der selbst zur Wärmeabführung kaum etwas beizutragen vermag.

Die Herstellung von Doppelmänteln auf dem Wege des Strangpressens ist im Hinblick auf die dafür erforderlichen Strangpreßwerkzeuge sehr aufwendig.

Aus EP-A-0 048 213 und US-A-4 244 098 sind Motorengehäuse mit Mantelschalen der eingangs erwähnten Art bekannt, wobei die einzelnen Schalenteile miteinander über Nasenleisten verbunden sind.

Angesichts dieser Gegebenheiten hat sich der Erfinder das Ziel gesetzt, ein Gehäuse der eingangs genannten Art mit Mantelschale sowohl bezüglich seiner Herstellbarkeit zu verbessern als auch eine günstigere Kühlwirkung zu erzeugen.

Zur Lösung dieser Aufgabe führen die kennzeichnenden Merkmale von Anspruch 1.

Das Motorgehäuse wird als einfaches Rohr gepreßt, der Kühlmantel bzw. die Mantelschale getrennt hergestellt, bevorzugt in mehreren Teilen.

Zur Befestigung des äußeren Kühlmantels ist ein Sockelteil oder Klemmkastensockel des Gehäuses querschnittlich beidends mit jeweils einer Nasenleiste versehen, welche von einem Gegenglied des Kühlmantels hintergriffen wird. Damit sind die sich durch innenliegende Stützfüße gegen den Rohrumfang abstützenden Teilmäntel oder Mantelteile auf dem Rohr fest verspannt.

Die erfindungsgemäß C-förmige Querschnittsausbildung des Stützfußes hat den Vorzug, daß sich der Kühlmantel elastisch auf dem Gehäuse abzustützen vermag. Dabei hat es sich als besonders günstig erwiesen, den durch die freien Enden der Stützfüße bestimmten Kreis von kleinerem Durchmesser zu wählen als den Außendurchmesser des Rohres oder Gehäuses. Hierdurch entsteht beim Aufbringen der Mantelschale auf das Rohr eine plastische Verformung an den C-förmigen Soll-Biegestellen und es ergeben sich Spannungen, welche der maximalen Streckgrenze dieser Elemente entsprechen, so daß ein gleichmäßiger Anpreßdruck auf die Gehäusewand erreicht wird.

Wenn auch die bevorzugte Ausbildung der Mantelschale bzw. des Kühlmantels mehrteilig ist, kann diese/r auch einteilig hergestellt werden, was allerdings höhere Werkzeugkosten verursacht. Auch wird das Verspannen und Fixieren der Mantelschale auf dem Rohr schwieriger. Der aus zwei Schalenteilen bestehende Kühlmantel kann auf einfache Weise verspannt und mit einer Verschlußleiste festgelegt werden. Diese ist im übrigen so ausgeführt, daß sie für mehrere Baugrößen von Motoren geeignet ist und dadurch die Lagerhaltung verbilligt.

Sowohl der einteilige als auch der mehrteilige Kühlmantel sind mit äußeren Kühlrippen ausgebildet, was eine besonders günstige Kühlung bei, drehzahlgeregelten Motoren erzeugt. Wegen des sehr geringen Luftdurchsatzes im niedrigen Drehzahlbereich des Motors ist die Wärmeabführung innerhalb der Kühlkanäle gering, wenn nicht ein drehzahlunabhängiger Sonderlüfter eingesetzt ist.

Die Verlustwärme wird in diesem Falle z. T. über die äußere Oberfläche durch freie Konvektion abgeführt. Dies wird durch den geringen Wärmeübergangswiderstand begünstigt, der durch die erfindungsgemäß ausgebildeten Stützfüße erzielt wird.

Bei einer besonders günstigen Form des Gehäuses ragen auch von dessen Außenfläche Kühlrippen ab, welche in den Mantelraum zwischen Rohr und Mantelschale einragen. Dank dieser Maßgabe kann das Gehäuse bei niedriger zu erwartender Verlustwärme ohne Kühlmantel eingesetzt werden und wird nur bei hoher Verlustwärme mit der Mantelschale bzw. dem Kühlmantel versehen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1:     eine Schrägsicht auf einen Teil des Gehäuses eines Elektromotors mit Mantel;

Fig. 2:     einen vergrößerten Teilquerschnitt durch das Gehäuse;

Fig. 3:     einen Teil des Mantels im Querschnitt;

Fig. 4:     ein gegenüber Fig. 3 vergrößertes Detail der Fig. 1;

Fig. 5:     ein anderes vergrößertes Detail der Fig. 1;

Fig. 6,7:     Querschnitte durch andere Ausführungsformen.

Das Gehäuse 10 eines in der Zeichnung aus Gründen der übersichtlichkeit nicht weiter dargestellten Elektromotors besteht aus einem Rohr eines Innenradius r von beispielsweise 55 mm und ist aus einer Aluminiumlegierung auf dem Wege des Strangpressens hergestellt. An der Rohraußenfläche sind ausgeformte Längsrippen 12 erkennbar sowie vier von Kragrippenpaaren 14 gebildete Kedernuten 15 zur Aufnahme von Spannschrauben od. dgl.

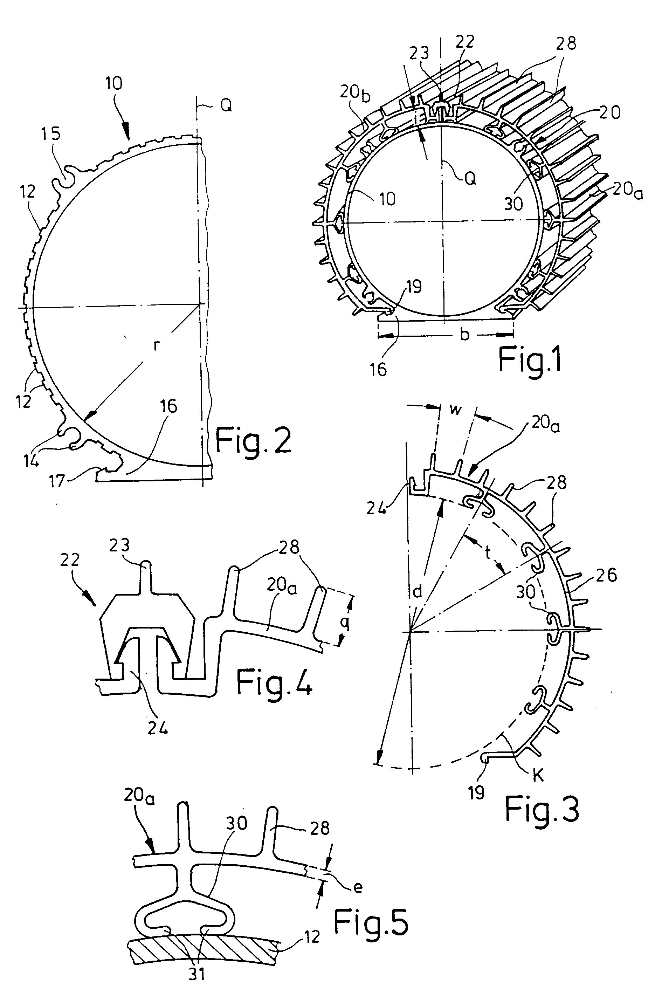

In dem in Fig. 1 unteren Rohrbereich ist an das Rohr 10 eine Sockelrippe 16 der Breite b von etwa 72 mm angeformt, die an beiden Querschnittsenden mit in Längsrichtung des Rohres 10 durchgehenden Nasenleisten 17 versehen ist.

Jede der Nasenleiste 17 wird von einer Gegenleiste 19 einer in radialem Abstand i das Rohr 10 umgebenden Mantelschale 20 hintergriffen. Diese wird in Fig. 1 von zwei Teilschalen 20$_a$,20$_b$ gebildet, die im Rohrzenit durch ein Klemmprofil 22 miteinander verbunden sind. Letzteres ist rinnenförmig ausgebildet und mit einer Kammrippe 23 versehen. Dieses Klemmprofil 22 übergreift mit seinen Rinnenschenkeln ein Paar radialer Klemmrippen 24 der Teilschalen 20$_a$, 20$_b$. Die Klemmrippen 24 sitzen in Einbaulage der Teilschalen 20$_a$, 20$_b$ jenem Rohr 10 auf.

Die Teilschale 22$_a$ oder 22$_b$ ist ebenfalls aus Aluminium stranggepreßt und weist an der Außenseite ihres querschnittlich gekrümmten Schalenkörpers 26 -- einer Wanddicke e von hier 1,5 mm -- radiale Kühlrippen 28 in einem Bogenabstand w von etwa 9° auf und nach innen hin Stützfüße 30, deren mittiger Bogenabstand t etwa 30° beträgt. Jeder Stützfuß 30 ist zum Rohr 12 hin als offenes Rinnenprofil mit zwei Fußenden 31 ausgebildet. Diese bestimmen eine Kreiskontur K, deren Durchmesser d kürzer ist als der Außendurchmesser des Rohres 10. Dank dieser Maßgabe wird ein fester Klemmsitz der Mantelschalen 20$_a$, 20$_b$ auf dem Rohr 10 erreicht und eine plastische Verformung der querschnittlich C-förmigen Stützfüße 30.

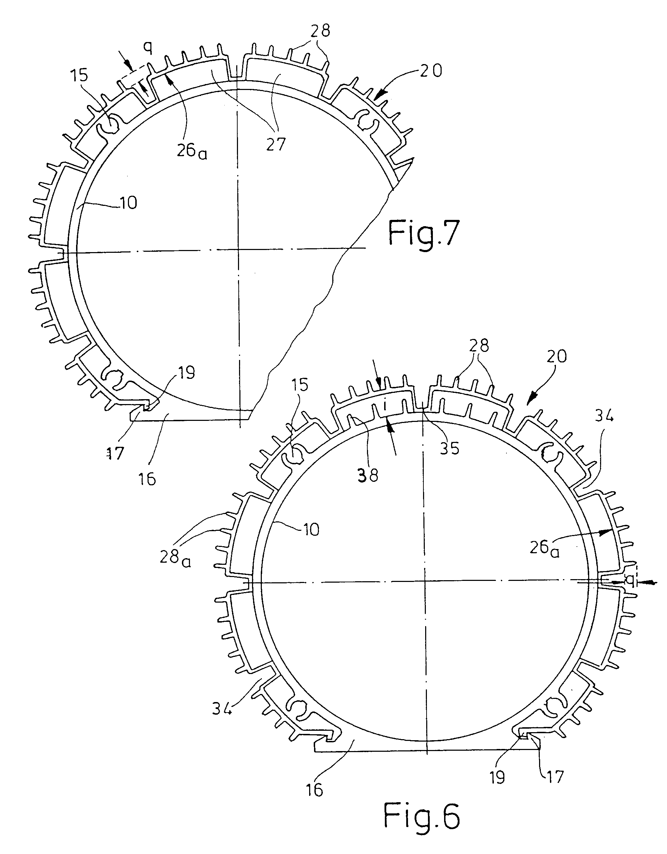

Bei den Ausführungsbeispielen nach den Fig. 6,7 ist die Mantelschale 20 einstückig und endet querschnittlich mit den beschriebenen Gegenleisten 19, welche die Nasenleisten 17 der Sockelrippe 16 des Rohres 10 hintergreifen. Hier ist der Schalenkörper 26$_a$ so ausgeformt, daß querschnittlich Radialrinnen 34 entstehen, wobei das jeweilige Rinnentiefste 35 dem Rohr 10 aufsitzt. Die Tiefe der Radialrinnen 34 entspricht also in etwa dem Maß i. Auch hier bestimmen die Rinnentiefsten 34 die vorab beschriebene Kontur K.

Zwischen der Radialrinnen 34 sind die jeweiligen Abschnitte des Schalenkörpers 26$_a$ mit Kühlrippen 28$_a$ ausgerüstet, deren Rippenlänge q kürzer ist als die Rippenlänge q der Kühlrippen 28 im Ausführungsbeispiel der Fig. 4. Die Anzahl der Kühlrippen 28$_a$ ist erheblich größer als jene der Kühlrippen 28 im vorab beschriebenen Beispiel.

In Fig. 6 ist gezeigt, daß in die von Rohr 10 und Schalenkörper 26$_a$ gebildeten Mantelräume 27 zusätzliche Kühlrippen 38 des Rohres 10 einragen.

**Patentansprüche**

1. Rohrförmiges Gehäuse (10) für einen Elektromotor mit das Gehäuse umgebender sowie daran festliegender Mantelschale (20), die sich gegen den Umfang des rohrförmigen Gehäuses (10) mittels rippenartiger Halteorgane (30,34) abstützt sowie mit endwärtigen Nasenleisten (19) zu deren Befestigung versehen ist,

   dadurch gekennzeichnet,

   dass das rohrförmige Gehäuse (10) mit Gegenorganen (17) zum Hintergreifen der Nasenleisten (19) der Mantelschale (20) versehen ist.

2. Gehäuse nach Anspruch 1, dadurch gekennzeichnet, daß das Rohr (10) und/oder die Mantelschale (20) stranggepreßte Profile sind.

3. Gehäuse nach Anspruch 1 oder 2, dadurch gekennzeichnet, daß als Halteorgane aus dem Schalenkörper (26$_a$) der Mantelschale (20) rohrwärts radiale Rinnen (34) herausgeformt und zwischen diesen von Schalenkörper und Rohr (10) Mantelräume (27) gebildet sind.

4. Gehäuse nach einem der Ansprüche 1 bis 3, dadurch gekennzeichnet, daß die zwischen den Rinnen (34) verlaufenden Teile des Schalenkörpers (26$_a$) mit etwa radialen Außenrippen (28) versehen sind.

5. Gehäuse nach einem der Ansprüche 1 bis 4, gekennzeichnet durch Teilschalen (26$_a$,26$_b$), die miteinander durch wenigstens eine Klemmleiste (22) verbunden sind, welche Klemmrippen (24) unterschiedlicher Teilschalen übergreift.

6. Gehäuse nach Anspruch 5, dadurch gekennzeichnet, daß die Klemmleiste (22) mit Kühlrippe/n (23) versehen ist.

7. Gehäuse nach wenigstens einem der Ansprüche 1 bis 6, gekennzeichnet durch nach innen abragende Stützfüße (30) der Mantelschale/n (20;20$_a$;20$_b$).

8. Gehäuse nach Anspruch 5 oder 7, dadurch gekennzeichnet, daß die Klemmrippen (24) Teile von Stützfüßen (30) sind.

9. Gehäuse nach wenigstens einem der Ansprüche 1 bis 8, dadurch gekennzeichnet, daß die Stützfüße (30) an ihren Enden C-förmig ausgebildet und mit freien Kanten (31) versehen sind.

10. Gehäuse nach wenigstens einem der Ansprüche 1 bis 9, dadurch gekennzeichnet, daß ein von den freien Kanten (31) der Stützfüße (30) oder von den Rinnen (34) der Mantelschale ($26_a$) bestimmter Kreis (K) von geringerem Durchmesser (d) ist als die Rohraußenseite ($2 \cdot r$).

11. Gehäuse nach wenigstens einem der Ansprüche 1 bis 10, dadurch gekennzeichnet, daß das Rohr (10) mit radialen Kühlrippen (38) versehen ist, die in einen Mantelraum (27) zwischen Rohr und Mantelschale ($20; 20_a; 20_b$) einragen.

## Claims

1. Tubular casing (10) for an electric motor comprising an outer shell (20) surrounding the casing and fixed thereto, said outer shell bearing against the circumference of the tubular casing (10) by means of rib-like retaining elements (30, 34) and being provided with end nose strips (19) for the fastening thereof, characterised in that the tubular casing (10) is provided with counter-elements (17) for engaging the nose strips (19) of the outer shell (20) at the rear.

2. Casing according to claim 1, characterised in that the tube (10) and/or the outer shell (20) are extruded sections.

3. Casing according to claim 1 or claim 2, characterised in that radial channels (34) in the direction of the tube are formed from the shell body ($26_a$) of the outer shell (20) as retaining elements and enclosed spaces (27) are formed therebetween by the shell body and the tube (10).

4. Casing according to one of claims 1 to 3, characterised in that the parts of the shell body ($26_a$) extending between the channels (34) are provided with substantially radial outer ribs (28).

5. Casing according to one of claims 1 to 4, characterised by partial shells ($26_a$, $26_b$) which are connected together by means of at least one clamping strip (22), said clamping strip engaging clamping ribs (24) of different partial shells.

6. Casing according to claim 5, characterised in that the clamping strip (22) is provided with cooling rib(s) (23).

7. Casing according to at least one of claims 1 to 6, characterised by inwardly sloping supporting feet (30) of the outer shell(s) ($20; 20_a; 20_b$).

8. Casing according to claim 5 or claim 7, characterised in that the clamping ribs (24) are parts of supporting feet (30).

9. Casing according to at least one of claims 1 to 8, characterised in that the supporting feet (30) have C-shaped ends and are provided with free edges (31).

10. Casing according to at least one of claims 1 to 9, characterised in that a circle (K) defined by the free edges (31) of the supporting feet (30) or by the channels (34) of the outer shell ($26_a$) has a smaller diameter (d) than the outer face of the tube ($2 \times r$).

11. Casing according to at least one of claims 1 to 10, characterised in that the tube (10) is provided with radial cooling ribs (38) which project into an enclosed space (27) between the tube and the outer shell ($20; 20_a; 20_b$).

## Revendications

1. Carter tubulaire (10) pour un moteur électrique avec une coque-enveloppe (20) qui entoure le carter auquel elle est fixée et qui s'appuie contre la périphérie du carter tubulaire (10) au moyen d'organes d'appui (30,34) du type nervure, ainsi qu'avec, côté extrémités, des profilés à talon (19) pour sa fixation,
carter caractérisé
par le fait que le carter tubulaire (10) comporte des contre-organes (17) venant saisir, par derrière, les profilés à talon (19) de la coque-enveloppe (20).

2. Carter selon la revendication 1, caractérisé par le fait que le tube (10) et/ou la coque-enveloppe (20) sont des profilés obtenus par extrusion.

3. Carter selon la revendication 1 ou 2, caractérisé par le fait que, comme organes d'appui, des rainures radiales (34) viennent de forme, depuis le corps ($26_a$) de la coque-enveloppe (20), en direction du tube et par le fait qu'entre celles-ci, le corps de la coque et la tube (10) forment des espaces (27).

4. Carter selon l'une des revendications 1 à 3, caractérisé par le fait que les parties du corps de coque ($26_a$) situées entre les rainures (34) présentent des nervures extérieures (28) à peu près radiales.

**5.** Carter selon l'une des revendications 1 à 4, caractérisé par des coques partielles ($26_a$), ($26_b$) qui sont réunies l'une avec l'autre par au moins un profilé de bridage (22) qui saisit, par-dessus, les nervures de bridage (24) de coques partielles différentes.

**6.** Carter selon la revendication 5, caractérisé par le fait que le profilé de bridage (22) présente une nervure/des nervures de refroidissement (23).

**7.** Carter selon au moins l'une des revendications 1 à 6, caractérisé par des pieds d'appui (30), dirigés vers l'intérieur, de la coque-enveloppe/des coques-enveloppes ($20;20_a;20_b$).

**8.** Carter selon la revendication 5 ou 7, caractérisé par le fait que les nervures de bridage (24) sont des portions des pieds d'appui (30).

**9.** Carter selon au moins l'une des revendications 1 à 8, caractérisé par le fait que les pieds d'appui (30) sont, à leurs extrémités, en forme de C et présentent des bords libres (31).

**10.** Carter selon au moins l'une des revendications 1 à 9, caractérisé par le fait qu'un cercle (K), déterminé par les bords libres (31) des pieds d'appui (30) ou par les rainures (34) de la coque-enveloppe ($26_a$) a un diamètre (d) inférieur à celui de la face extérieure du tube (2 r).

**11.** Carter selon au moins l'une des revendications 1 à 10, caractérisé par le fait que le tube (10) est muni de nervures radiales de refroidissement (38) qui pénètrent dans un espace (27) existant entre le tube et la coque-enveloppe ($20;20_a;20_b$).

EP 0 288 429 B1

Fig.1

Fig.2

Fig.4

Fig.3

Fig.5

6

Fig.7

Fig.6